# EUROPEAN PATENT SPECIFICATION

(11) **EP 4 317 908 B1**
(45) Date of publication and mention of the grant of the patent: **02.12.2026**
(21) Application number: 22880227.8
(22) Date of filing: 09.10.2022
(51) Int. Cl.: G01B 5/28, G01B 5/26, G01C 9/28

(54) **MEASUREMENT ASSEMBLY, MEASUREMENT METHOD AND MEASUREMENT SYSTEM**
MESSANORDNUNG, MESSVERFAHREN UND MESSSYSTEM
ENSEMBLE DE MESURE, PROCÉDÉ DE MESURE ET SYSTÈME DE MESURE

(30) Priority: 13.10.2021 CN 202111194031
(43) Date of publication of application: 07.02.2024
(73) Proprietor: Contemporary Amperex Technology (Hong Kong) Limited, Central, Central And Western District (HK)
(72) Inventor: LU, Qihuan, Ningde, Fujian 352100 (CN); SUI, Zhenjie, Ningde, Fujian 352100 (CN); HU, Xiaofeng, Ningde, Fujian 352100 (CN)
(74) Representative: Lorenz Seidler Gossel Part. mbB
(86) International application number: PCT/CN2022/124088
(87) International publication number: WO 2023/061288

(56) References cited:
- CN-A- 104 848 772
- CN-A- 107 966 093
- CN-U- 202 221 296
- CN-U- 203 785 611
- CN-U- 203 785 611
- CN-U- 207 066 334
- CN-U- 210 154 510
- CN-Y- 201 407 974
- JP-A- 2000 227 320
- JP-A- H0 814 807

## Description

This application refers to Chinese patent application No. 202111194031.1, filed on October 13, 2021 and entitled "MEASUREMENT ASSEMBLY AND MEASUREMENT SYSTEM".

### TECHNICAL FIELD

This application relates to the field of measurement technologies, and in particular, to a measurement assembly, a measurement method, and a measurement system.

### BACKGROUND

With the development of science and technology, users are having increasing demands for product quality, especially the appearance quality of products that directly affects user perception. In some cases, most products are assembled from multiple components. Before assembling multiple components into a product, it is commonly necessary to inspect the flush condition of the components to ensure that the appearance quality of the assembled product meets requirements. In addition, after the product is formed, it is still necessary to inspect the flush condition of the product to further ensure that the appearance quality of the product meets the requirements.

CN 210 154 510 U relates to the technical field of building construction tools and discloses a guiding rule device which can rapidly detect the flatness of the wall surface. CN 207 066 334 U discloses a flatness detection tooling, which comprises a guide rail. CN 203 785 611 U discloses a flatness measuring tool for steel component surface.

### SUMMARY

This application is intended to resolve at least one of the technical problems in the prior art. In view of this, an objective of this application is to provide a measurement assembly, a measurement method, and a measurement system to improve efficiency of flush measurement.

It is provided a measurement assembly, including a support beam and a flush gauge. The support beam includes a reference surface and a track. The reference surface is used to fit against the measurement reference surface, and an extension direction of the track is parallel to the reference surface. The flush gauge includes a main body and a measurement rod. The main body is slidably disposed on the track, and the measurement rod includes a first end and a second end disposed opposite each other. The first end is fixedly connected to the main body, and the second end abuts against a surface of an object being measured to measure flush at a point where the second end abuts on the surface of the object being measured. The second end is configured to be movable toward and away from the first end.

The flush gauge is configured to be movable relative to the support beam, allowing it to perform multi-point inspection on the surface of the object being measured more conveniently, thereby improving measurement efficiency.

The support beam further includes at least one first groove and a magnetic block located within the first groove, where the first groove is a groove formed by the reference surface recessed towards interior of the support beam, and the magnetic block is made of a strong magnetic material. The magnetic block is used to abstract the component that provides the measurement reference surface, so as to enhance the stability of the measurement assembly in measurement of the flush of the object being measured, thereby improving measurement accuracy.

Two first grooves are provided, and each first groove is provided with a magnetic block. In a case that the component providing the measurement reference surface is made of a material that is attractable by a magnetic block, when the reference surface fits against the measurement reference surface, the two magnetic blocks can attract the component providing the measurement reference surface, further enhancing the stability of the measurement assembly in measurement of the flush of the object being measured.

The support beam further includes a third end and a fourth end disposed opposite each other, where a pointing direction of the third end to the fourth end is the same as an extension direction of the track, and the two first grooves are respectively located at the third end and the fourth end. With one first groove disposed at each of the third end and the fourth end and one magnetic block disposed in each of the two first grooves, the stability of the measurement assembly in measuring the flush of the object being measured can be further enhanced.

The measurement assembly further includes two bases respectively located at the third end and the fourth end, where any one base is attracted to a corresponding magnetic block to fit against a corresponding reference surface. When the component providing the measurement reference surface is made of a material that is attractable by a magnetic block, the two magnetic blocks each can attract one base, and the two bases can support the support beam, thereby enhancing the stability of the measurement assembly in measuring the flush of the object being measured.

The support beam further includes a spirit level. The spirit level is used for measuring whether the support beam is level. In use of the measurement assembly, the support beam can be adjusted to a horizontal position with the help of the spirit level to ensure that the support beam is level when the measurement assembly is used for measurement, thereby improving the accuracy of the measurement assembly in measuring the flush of the object being measured.

Two spirit levels are provided, and the two spirit levels are disposed opposite each other. A pointing direction of one of the spirit levels to the other is the same as the extension direction of the track, and both spirit levels are spiral digital levels. Compared to the bubble level, the spiral digital level provides a more intuitive way to determine the state of the support beam.

The main body is detachably connected to the track. When the measurement assembly is not in use, the main body can be detached from the track, and the support beam and the flush gauge can be placed separately for easy carrying of the measurement assembly.

The support beam further includes a side surface, where the side surface is next to the reference surface, and the track is a second groove recessed from the side surface towards the interior of the support beam, where a recess direction of the track is perpendicular to the extension direction of the track.

The main body includes a body fixed to the first end and a protrusion connected to the body. The protrusion is detachably fitted into the second groove, allowing the main body to be slidably disposed on the track. The recess direction of the track is perpendicular to the extension direction of the track, and a protrusion matching the second groove is provided on the main body, so that the stability of the main body sliding on the track can be enhanced, achieving a more convenient detachable connection.

It is provided a measurement system including multiple support beams and a flush gauge in the measurement assembly described above.

According to the present application, the measurement system includes multiple support beams and a flush gauge. The support beam includes a reference surface and a track, where the reference surface is used to fit against the measurement reference surface, and an extension direction of the track is parallel to the reference surface. The flush gauge includes a main body and a measurement rod. The measurement rod includes a first end and a second end disposed opposite each other. The first end is fixedly connected to the main body, and the second end is configured to abut against a surface of an object being measured. The second end is configured to be movable toward and away from the first end. Lengths of the tracks of any two support beams are different, and the main body of the flush gauge is slidably disposed on the track of any one support beam.

In the technical solutions of the embodiments of this application, with the measurement assembly described in the foregoing embodiments, the flush at multiple points on the surface of the object being measured can be measured more conveniently by moving the flush gauge without changing the measurement reference surface, thereby improving the measurement efficiency and accuracy.

In some embodiments, any one support beam further includes at least one first groove and a magnetic block located in the first groove. The first groove is a groove formed by the reference surface recessed towards interior of the support beam. Using the magnetic block to abstract the component that provides the measurement reference surface can further enhance the stability of the measurement assembly in measurement of the flush of the object being measured.

In some embodiments, two first grooves are provided on any one support beam, and each first groove is provided with one magnetic block inside. Through cooperation of the two magnetic blocks, the stability of the measurement assembly in measurement of the flush of the object being measured can be further enhanced.

In some embodiments, any one support beam further includes a third end and a fourth end disposed opposite each other, and a pointing direction of the third end to the fourth end is the same as the extension direction of the track. The two first grooves on any one support beam are respectively located at the third end and the fourth end of the corresponding support beam. Arranging the magnetic blocks at two ends of the support beam can enhance the stability of the measurement assembly during use.

In some embodiments, the measurement system further includes two bases respectively located at the third end and the fourth end of any one support beam, where any one base is attracted to the corresponding magnetic block to fit against a corresponding reference surface. When the component providing the measurement reference surface is made of a material that is attractable by a magnetic block, the two magnetic blocks each can attract one base, and the two bases can support the support beam, thereby enhancing the stability of the measurement assembly in measuring the flush of the object being measured.

In some embodiments, any one support beam further includes a spirit level. The spirit level is used for measuring whether the support beam is level. In use of the measurement assembly, the support beam can be adjusted to a horizontal position with the help of the spirit level to ensure that the support beam is level when the measurement assembly is used for measurement, thereby improving the accuracy of the measurement assembly in measuring the flush of the object being measured.

In some embodiments, each support beam further includes a side surface connected to the reference surface, the track is a second groove recessed from the side surface towards the interior of the support beam, and a recess direction of the track is perpendicular to the extension direction of the track. The main body includes a body fixed to the first end and a protrusion connected to the body, and the protrusion is detachably fitted into the second groove, allowing the main body to be slidably disposed on the track. The recess direction of the track is perpendicular to the extension direction of the track, and a protrusion matching the second groove is provided on the main body, so that the stability of the main body sliding on the track can be enhanced, achieving a more convenient detachable connection.

It is provided a measurement method, including:
providing a measurement assembly as described above;
fitting the reference surface of the measurement assembly against a measurement reference surface;
abutting the second end of the flush gauge against a surface of an object being measured to obtain flush at an abutting point; and
moving the flush gauge along the track to obtain flush at other points on the surface of the object being measured.

The flush at multiple points on the surface of the object being measured can be measured more conveniently by moving the flush gauge without changing the measurement reference surface, thereby improving the measurement efficiency and accuracy.

According to the present application, it is provided a measurement method, including:
providing a measurement system as described above;
obtaining dimensions of surface of an object being measured and selecting, in the measurement system based on the dimensions, one support beam of the track that matches the dimensions of surface of an object being measured;
fitting the reference surface of the support beam against a measurement reference surface;
fitting the main body of the flush gauge into the track of the support beam and abutting the second end against the surface of the object being measured to obtain flush at an abutting point; and
moving the flush gauge along the track to obtain flush at other points on the surface of the object being measured.

Through provision of support beams with different lengths and detachable connection of the flush gauge and the support beam, the measurement assembly can be applied to a wider range of objects to be measured simply by switching support beams based on dimensions, thereby improving the applicability and measurement efficiency. The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

In the accompanying drawings, unless otherwise specified, the same reference signs in multiple accompanying drawings denote the same or similar components or elements. The accompanying drawings are not necessarily drawn to scale. It should be understood that these accompanying drawings merely illustrate some embodiments disclosed according to this application and should not be considered as limitations on the scope of this application.
FIG. 1 is a schematic structural diagram of a measurement assembly according to some embodiments of this application;
FIG. 2 is a locally enlarged view of position A in FIG. 1; and
FIG. 3 is a schematic diagram of a partial structure of a support beam according to some embodiments of this application.

The accompanying drawings are not drawn to scale. Reference signs in specific embodiments are as follows:
support beam 110, reference surface 111, track 112, first groove 113, support body 114, spirit level 115, side surface 116;
flush gauge 120, main body 121, measurement rod 122, first end 123, second end 124; and
base 130.

### DESCRIPTION OF EMBODIMENTS

The following describes in detail the embodiments of technical solutions of this application with reference to the accompanying drawings. The following embodiments are merely intended for a clearer description of the technical solutions of this application and therefore are merely used as examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, particular sequence or primary-secondary relationship of the technical features indicated. In the description of the embodiments of this application, "multiple" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the technical terms "mount", "connect", "join", and "fasten" should be understood in their general senses. For example, they may refer to a fixed connection, a detachable connection, or an integrated connection, may refer to a mechanical connection or an electrical connection, and may refer to a direct connection, an indirect connection through an intermediate medium, an internal connection between two elements, or an interaction between two elements. Persons of ordinary skill in the art can understand specific meanings of these terms in this application as appropriate to specific situations.

With the development of science and technology, users are having increasing demands for product quality, especially the appearance quality of products that directly affects user perception. In some cases, most products are assembled from multiple components. Before assembling multiple components into a product, it is commonly necessary to inspect the flush condition of the components to ensure that the appearance quality of the assembled product meets requirements. In addition, after the product is formed, it is still necessary to inspect the flush condition of the product to further ensure that the appearance quality of the product meets the requirements.

The inventors of this application have noted that in inspecting flush of component surface or product surface, a flush gauge can be used to inspect the flush of the object being measured. In some cases, in use of a flush gauge for inspection, the flush gauge is first fixed at a predetermined position and then used to inspect one point on the surface of the object being measured, which is low in efficiency.

In order to improve the efficiency in testing flush of the object being measured, the applicant has discovered that a track can be disposed to allow the flush gauge to slide on the track so that the flush at multiple points on the surface of the object being measured can be measured.

Based on this consideration, to improve the efficiency of testing the flush of the object being measured, the inventor has designed a measurement assembly through in-depth research. The measurement assembly includes: a support beam, where the support beam includes a reference surface and a track, where the reference surface is used to fit against the measurement reference surface, and an extension direction of the track is parallel to the reference surface; flush gauge, where the flush gauge includes a main body and a measurement rod, where the main body is slidably disposed on the track, and the measurement rod includes a first end and a second end disposed opposite each other, the first end being fixed on the main body, and the second end being used to abut against the surface of the object being measured and movable toward and away from the first end. With such design, it is possible to fit the reference surface against the measurement reference surface and then make the second end abut against the surface of the object being measured to obtain the flush at the point where the second end abuts on the surface of the object being measured. After the flush at that point is obtained, the main body can slide along the track to obtain the flush at other points on the surface of the object being measured, thereby improving efficiency of measuring the flush of the object being measured.

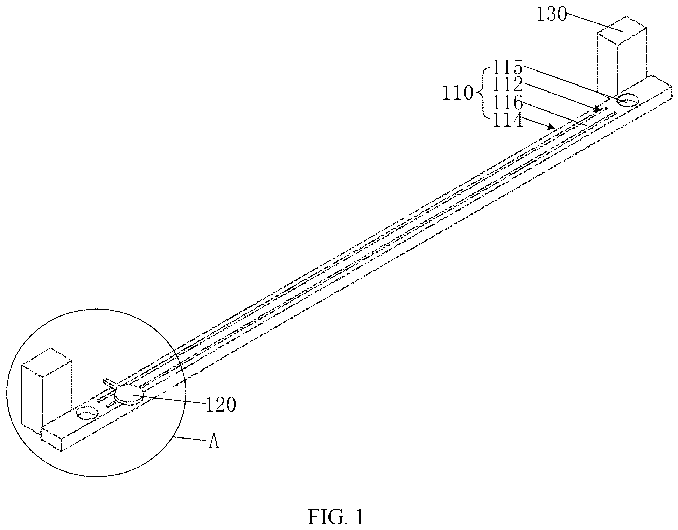

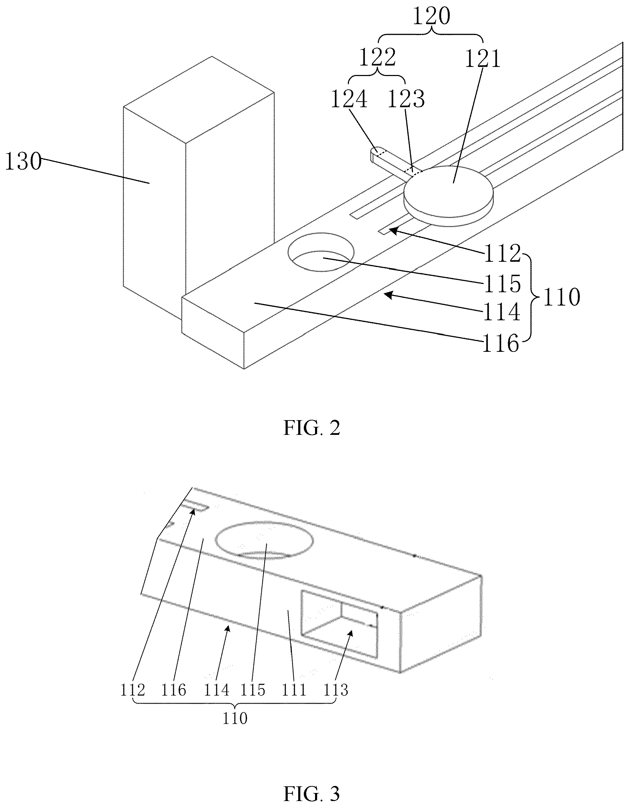

According to some embodiments of this application, refer to FIG. 1 to FIG. 3. FIG. 1 is a schematic structural diagram of a measurement assembly according to some embodiments of this application; FIG. 2 is a locally enlarged view of position A in FIG. 1; and FIG. 3 is a schematic diagram of a partial structure of a support beam according to some embodiments of this application.

According to an embodiment of this application, a measurement assembly is provided, as shown in FIG. 1 to FIG. 3. The measurement assembly includes a support beam 110 and a flush gauge 120. The support beam 110 includes a reference surface 111 and a track 112. The reference surface 111 is used to fit against the measurement reference surface, and an extension direction of the track 112 is parallel to the reference surface 111. The flush gauge 120 includes a main body 121 and a measurement rod 122. The main body 121 is slidably disposed on the track 112, and the measurement rod 122 includes a first end 123 and a second end 124 disposed opposite each other. The first end 123 is fixed on the main body 121, and the second end 124 abuts against surface of an object being measured to measure flush at a point where the second end abuts and is movable toward and away from the first end 123.

During use of the measurement assembly, the reference surface 111 can fit against the measurement reference surface, and the second end 124 of the flush gauge 120 can abut against the surface of the object being measured to obtain the flush at the point where the second end 124 abuts on the surface of the object being measured. After the flush at the point where the second end 124 abuts on the surface of the object being measured is obtained, the main body 121 of the flush gauge 120 can slide along the track 112 to obtain the flush at other points on the surface of the object being measured, thereby improving the efficiency of measuring the flush of the object being measured.

In some embodiments, the measurement assembly further includes a fixing bracket (not shown in the figure) for fixing the object being measured, and the fixing bracket is provided with a measurement reference surface. In this way, in use of the measurement assembly for measurement, it is possible to fix the object being measured to the fixing bracket, fit the reference surface 111 against the measurement reference surface, and abut the second end 124 of the flush gauge 120 against the surface of the object being measured to obtain a height difference between the measurement reference surface and the point where the second end 124 abuts on the surface of the object being measured, thereby obtaining the flush where the second end 124 abuts on the surface of the object being measured. In addition, the main body 121 of the flush gauge 120 can slide along the track 112 to obtain height differences between other points on the surface of the object being measured and the measurement reference surface, so as to further obtain the flush at other points on the surface of the object being measured, thereby improving efficiency of measuring the flush of the object being measured.

In some embodiments, regarding the height difference between the measurement reference surface and the point where the second end 124 abuts on the surface of the object being measured: when the point where the second end 124 abuts on the surface of the object being measured is on the measurement reference surface plane, the height difference is 0, that is, a value displayed on the flush gauge 120 is 0; when the point where the second end 124 abuts on the surface of the object being measured is lower than the measurement reference surface, the height difference is a positive value, that is, the value displayed on the flush gauge 120 is a positive value; and when the point where the second end 124 abuts on the surface of the object being measured is higher than the measurement reference surface, the height difference is a negative value, that is, the value displayed on the flush gauge 120 is a negative value.

For example, when the point where the second end 124 abuts on the surface of the object being measured is on the measurement reference surface plane, the value displayed on the flush gauge 120 is 0; when the point where the second end 124 abuts on the surface of the object being measured is 2 mm (mm: millimeter) lower than the measurement reference surface, the value displayed on the flush gauge 120 is 2 mm; and when the point where the second end 124 abuts on the surface of the object being measured is 2 mm higher than the measurement reference surface, the value displayed on the flush gauge 120 is -2 mm.

It should be noted that in other embodiments, it may be that: when the point where the second end 124 abuts on the surface of the object being measured is on the measurement reference surface, the height difference is 0, that is, a value displayed on the flush gauge 120 is 0; when the point where the second end 124 abuts on the surface of the object being measured is lower than the measurement reference surface, the height difference is a negative value, that is, the value displayed on the flush gauge 120 is a negative value; and when the point where the second end 124 abuts on the surface of the object being measured is higher than the measurement reference surface, the height difference is a positive value, that is, the value displayed on the flush gauge 120 is a positive value. This is not limited in this application.

Generally, due to the maturity of existing manufacturing methods (such as manufacturing processes and mechanical devices for manufacturing components), the flush values of the object being measured are mostly within ±2 mm. Therefore, flush gauge 120 with a display value range of ±3 mm can be used. It should be noted that when the flush value of the object being measured is beyond ±3 mm, the display value range of the flush gauge 120 can be adjusted, or the flush gauge 120 can be replaced with flush gauge 120 with a larger display value range. This is not limited in this application.

It should also be noted that in other embodiments, there may be no fixing bracket for fixing the object being measured. For example, in an embodiment, any one plane on the surface of the object being measured can be used as the measurement reference surface. In this case, the reference surface 111 of the support beam 110 can be directly fitted against the measurement reference surface on the surface of the object being measured, and the flush of the object being measured can be measured via the flush gauge 120.

In some embodiments, the support beam 110 is made of a rigid material. This helps to avoid deformation of the support beam 110 when the measurement assembly is used to measure the object being measured, thereby improving stability of the measurement assembly during use. In an embodiment, the support beam 110 is made of stainless steel. Because stainless steel provides corrosion resistance, the service life of the support beam 110 can be prolonged. In another embodiment, the support beam 110 may be made of aluminum alloy. This is not limited in this application.

According to some embodiments of this application, optionally, still referring to FIG. 1 to FIG. 3, the support beam 110 further includes at least one first groove 113 and a magnetic block (not shown in the figure) located in the first groove 113. The first groove 113 is a groove formed by the reference surface 111 recessed towards interior of the support beam 110.

The magnetic block may be made of a strong magnetic material. The strong magnetic material is a material that can react to a magnetic field in a specific way, such as ferromagnetic material or ferrimagnetic material. In an embodiment, the magnetic block is a magnet.

In this way, when the component providing the measurement reference surface is made of a material that is attractable by a magnetic block, with a magnetic block made of a strong magnetic material disposed in the first groove 113, the magnetic block can attract the component providing the measurement reference surface after the reference surface 111 is fitted against the measurement reference surface. This enhances the stability of the measurement assembly in measurement of the flush of the object being measured, thereby improving the measurement accuracy. In an embodiment, when the component providing the measurement reference surface is a fixing bracket used for fixing the object being measured, the magnetic block attracts the fixing bracket. In another embodiment, when the component providing the measurement reference surface is an object being measured, the magnetic block attracts the object being measured.

In some embodiments, the support beam 110 further includes a support body 114. The reference surface 111, the track 112, and the first groove 113 are all located on the support body 114. In an embodiment, the support body 114 is made of a metal material. The magnetic block can be directly placed in the first groove 113, and the magnetic force of the magnetic block attracting the support body 114 can ensure that the magnetic block does not detach from the first groove 113. In addition, an adhesive layer (not shown in the figure) can be further provided between the support body 114 and the magnetic block, further ensuring that the magnetic block does not detach from the first groove 113.

In another embodiment, the support body 114 can be made of a non-metal material. In this case, an adhesive layer can be provided between the support body 114 and the magnetic block to ensure that the magnetic block does not detach from the first groove 113. It should be noted that in this embodiment, the adhesive layer may alternatively be not used to fix the magnetic block in the first groove 113. In this case, the magnetic block may be fixed to the support body 114 via a fastener (such as screws) (not shown in the figure). This is not limited in this application.

In some embodiments, the magnetic block matches the first groove 113 to further ensure that the magnetic block does not detach from the first groove 113. Specifically, the magnetic block matching the first groove 113 means that the shape of the magnetic block is the same as that of the first groove 113 and the size of the magnetic block is slightly smaller than that of the first groove 113, so as to ensure that the magnetic block can be placed into the first groove 113.

In some embodiments, there are two magnetic blocks, and there are also two first grooves 113, with each first groove 113 provided with one magnetic block.

In this way, when the component providing the measurement reference surface is made of a material that is attractable by a magnetic block, the component providing the measurement reference surface can be attracted to the two magnetic blocks after the reference surface 111 is fitted against the measurement reference surface, thereby further enhancing the stability of the measurement assembly in measurement of the flush of the object being measured.

In some embodiments, the support beam 110 further includes a third end and a fourth end disposed opposite each other, and a pointing direction of the third end to the fourth end is the same as the extension direction of the track 112. The third end and the fourth end are each provided with one first groove 113.

In some embodiments, the opposite third end and fourth end of the support beam 110 disposed opposite each other are the third end and fourth end of the support body 114 disposed opposite each other. That the third end and the fourth end are each provided with one first groove 113 means that the third end is provided with one first groove 113 and the fourth end is also provided with one first groove 113.

When the component providing the measurement reference surface is made of a material that is attractable by a magnetic block, the reference surface 111 can be fitted against the measurement reference surface so as to use the two magnetic blocks to attract the component providing the measurement reference surface. In this case, with one first groove 113 disposed at each of the third end and the fourth end and one magnetic block disposed in each of the two first grooves 113, the stability of the measurement assembly in measuring the flush of the object being measured can be further enhanced.

In some embodiments, because the third end and the fourth end are each provided with a first groove 113, and each first groove 113 is provided with a magnetic block, one magnetic block is located on the third end and the other magnetic block is located on the fourth end. Therefore, during measurement of the flush of the object being measured via the measurement assembly, the third end and the fourth end disposed opposite each other can respectively be fixed to the component providing the measurement reference surface via a magnetic block, further enhancing the stability of the measurement assembly during measurement of the flush of the object being measured.

In one embodiment, the track 112 is located between the third end and the fourth end. In another embodiment, the track 112 extends from the third end to the fourth end. This is not limited in this application.

In some embodiments, the measurement assembly further includes two bases 130 that are attractable by a magnetic block. The two bases 130 are respectively located at the third end and the fourth end and both fit the reference surface 111. The two magnetic blocks each attract one base 130.

In this way, when the component providing the measurement reference surface is made of a material that is not attractable by a magnetic block, the two magnetic blocks each can attract one base 130, and the two bases 130 can support the support beam 110, thereby enhancing the stability of the measurement assembly in measuring the flush of the object being measured.

It should be noted that a shape of the base 130 is not limited in this application. For example, in an embodiment, the base 130 has a cylindrical shape. In another embodiment, the base 130 has a conical shape. In still another embodiment, the base 130 has a trapezoidal shape.

In some embodiments, the support beam 110 further includes a spirit level 115. In some embodiments, the spirit level 115 is a measuring tool for measuring angles and is commonly used for measuring an inclination angle relative to the horizontal position, flatness and straightness of various guides, and the like. In this embodiment, the spirit level 115 is used for measuring whether the support beam 110 is level.

In this way, in use of the measurement assembly, the support beam 110 can be adjusted to a horizontal position with the help of the spirit level 115 to ensure that the support beam 110 is level when the measurement assembly is used for measurement, thereby improving the accuracy of the measurement assembly in measuring the flush of the object being measured.

It should be noted that a type of spirit level 115 is not limited in this application. For example, the spirit level 115 is a bubble level. A frame of the bubble level is made of rigid material, and after processing, the bottom surface of the frame is made flat. Surface of the frame is provided with a capsule-shaped glass tube in the center, which is filled with ether or alcohol and has a small bubble, and there are scale markings on both ends of the glass tube. Under the action of gravity, the small bubble is always located at the highest point in the glass tube. Therefore, during the process of adjusting the support beam 110 to a horizontal position via the bubble level, when the small bubble in the glass tube is between two scale markings, it indicates that the support beam 110 is level.

In some embodiments, two spirit levels 115 are provided, and the two spirit levels 115 are disposed opposite each other. A pointing direction of one of the spirit levels 115 to the other is the same as the extension direction of the track 112, and both spirit levels 115 are spiral digital levels.

In this embodiment, during the adjusting the support beam 110 to a horizontal position via the spiral digital levels, when the spiral digital levels show a horizontal reading, it indicates that the support beam 110 is level. Compared to the bubble level, the spiral digital level provides a more intuitive way to determine the state of the support beam 110. In an example, the track 112 is located between the two spiral digital levels.

In some embodiments, the main body 121 is detachably disposed on the track 112.

In this embodiment, when the measurement assembly is not in use, the main body 121 can be detached from the track 112, and the support beam 110 and the flush gauge 120 can be placed separately for easy carrying of the measurement assembly.

In some embodiments, the support beam 110 further includes a side surface 116. The side surface 116 is connected to the reference surface 111, the track 112 is a second groove recessed from the side surface 116 towards the interior of the support beam 110, and the recess direction of the track 112 is perpendicular to the extension direction of the track 112.

In some embodiments, the main body 121 includes a body fixed to the first end 123 and a protrusion (not shown in the figure) connected to the body and detachably fitted into the second groove, allowing the main body 121 to be slidably disposed on the track 112. In some embodiments, there are two tracks 112, and the two tracks 112 have parallel extension directions. The main body 121 is slidably disposed on the two tracks 112 along the extension direction of any track 112.

The recess direction of the track 112 is perpendicular to the extension direction of the track 112, and a protrusion matching the second groove is provided on the main body, so that the stability of the main body sliding on the track can be enhanced, achieving a more convenient detachable connection.

In one embodiment, the two tracks 112 both are second grooves recessed from the side surface 116 towards the interior of the support beam 110, and the recess direction of any track 112 is perpendicular to its extension direction. Accordingly, the main body 121 includes two protrusions connected to the body, with one protrusion detachably fitted into one second groove, and the other protrusion detachably fitted into another second groove, allowing the main body 121 to be slidably disposed on the two tracks 112 along the extension direction of any track 112.

According to some embodiments of a second aspect of this application, this application further provides a measurement system, including multiple support beams 110 and a flush gauge 120. The support beam 110 includes a reference surface 111 and a track 112, where the reference surface 111 is used to fit against the measurement reference surface, and an extension direction of the track is parallel to the reference surface 111. The flush gauge 120 includes a main body 121 and a measurement rod 122. The measurement rod 122 includes a first end 123 and a second end 124 disposed opposite each other. The first end 123 is fixedly connected to the main body 121, and the second end 124 is configured to abut against surface of the object being measured. The second end 124 is configured to be movable toward and away from the first end 123. Lengths of the tracks 112 of any two support beams 110 are different, and the main body 121 of the flush gauge 120 is slidably disposed on the track 112 of any one support beam 110.

The flush gauge can detachably slide relative to the support beam, so that one flush gauge can be used with support beams of different sizes, which can improve applicability of the measurement system and facilitate multi-point inspection of the surface of the object being measured, thereby improving measurement efficiency.

In some embodiments, any one support beam 110 further includes at least one first groove 113 and a magnetic block located in the first groove 113. The first groove 113 is a groove formed by the reference surface recessed towards interior of the support beam.

When the component providing the measurement reference surface is made of a material that is attractable by a magnetic block, the reference surface can be fitted against the measurement reference surface so as to use the magnetic blocks to attract the component providing the measurement reference surface, thereby further enhancing the stability of the measurement assembly in measuring the flush of the object being measured.

In some embodiments, there are two first grooves 113 on any one support beam 110, and each first groove 113 is provided with one magnetic block (not shown in the figure) inside.

With one first groove disposed at each of the third end and the fourth end and one magnetic block disposed in each of the two first grooves, the stability of the measurement assembly in measuring the flush of the object being measured can be further enhanced.

In some embodiments, any one support beam 110 further includes a third end and a fourth end disposed opposite each other, and a pointing direction of the third end to the fourth end is the same as the extension direction of the track 112. The two first grooves 113 on any one support beam 110 are respectively located at the third end and the fourth end of the support beam 110.

With one first groove disposed at each of the third end and the fourth end and one magnetic block disposed in each of the two first grooves, the stability of the measurement assembly in measuring the flush of the object being measured can be further enhanced.

In some embodiments, the measurement system further includes two bases 130 respectively located at the third end and the fourth end of any one support beam 100, where each base 130 is attracted by a corresponding magnetic block to fit a corresponding reference surface 111.

When the component providing the measurement reference surface is made of a material that is not attractable by a magnetic block, the two magnetic blocks each can attract one base, and the two bases can support the support beam, thereby enhancing the stability of the measurement assembly in measuring the flush of the object being measured.

In some embodiments, any one support beam 110 further includes a spirit level 115. The spirit level 115 is used for measuring whether the support beam 110 is level.

In use of the measurement assembly, the support beam can be adjusted to a horizontal position with the help of the spirit level to ensure that the support beam is level when the measurement assembly is used for measurement, thereby improving the accuracy of the measurement assembly in measuring the flush of the object being measured.

In some embodiments, two spirit levels 115 are provided, and the two spirit levels 115 are disposed opposite each other. A pointing direction of one of the spirit levels 115 to the other is the same as the extension direction of the track 112, and both spirit levels 115 are spiral digital levels.

Compared to the bubble level, the spiral digital level provides a more intuitive way to determine the state of the support beam.

In some embodiments, the main body 121 is detachably connected to the track 112 of any one support beam 110.

When the measurement assembly is not in use, the main body can be detached from the track, and the support beam and the flush gauge can be placed separately for easy carrying of the measurement assembly.

In some embodiments, each support beam 110 further includes a side surface 160 connected to the reference surface 111, and the track is a second groove recessed from the side surface 160 towards the interior of the support beam 110, and the recess direction of the track 112 is perpendicular to the extension direction of the track 112. The main body 121 includes a body fixed to the first end and a protrusion connected to the body, and the protrusion is detachably fitted into the second groove, allowing the main body 121 to be slidably disposed on the track.

The recess direction of the track is perpendicular to the extension direction of the track, and a protrusion matching the second groove is provided on the main body, so that the stability of the main body sliding on the track can be enhanced, achieving a more convenient detachable connection.

Embodiments of a third aspect of this application provide a measurement method, including:
providing a measurement assembly, where the measurement assembly is the measurement assembly described in the foregoing embodiments;
fitting the reference surface of the measurement assembly against a measurement reference surface;
abutting the second end of the flush gauge against a surface of an object being measured to obtain flush at an abutting point; and
moving the flush gauge along the track to obtain flush at other points on the surface of the object being measured.

In this embodiment, the measurement assembly described in the foregoing embodiments is used so that it is possible to conveniently perform multi-point inspection of the flush gauge of the object being measured without changing the measurement reference surface, thereby improving the measurement efficiency and accuracy of the flush of the object being measured.

Embodiments of a fourth aspect of this application provide another measurement method, including:
providing a measurement system, where the measurement assembly is the measurement system described in the foregoing embodiments, including multiple support beams with different track lengths.
obtaining a size of surface of an object being measured and selecting, based on the size of the surface of the object being measured, a support beam with a track in the measurement system that matches the size of the surface of the object being measured;
fitting the reference surface of the support beam against a measurement reference surface;
fitting the main body of the flush gauge into the track of the support beam and abutting the second end against the surface of the object being measured to obtain flush at an abutting point; and
moving the flush gauge along the track to obtain flush at other points on the surface of the object being measured.

Through provision of support beams with different lengths and detachable connection of the flush gauge and the support beam, measurement assembly can be applied to a wider range of to-be-measured objects simply by switching support beams based on dimensions, thereby improving the applicability and measurement efficiency.

According to some embodiments of this application, still referring to FIG. 1 to FIG. 3, this application provides a measurement assembly, including: a support beam 110, where the support beam 110 includes a reference surface 111, a track 112, two magnetic blocks, two first grooves 113, a third end, a fourth end, and two spirit levels 115, where the reference surface 111 is used to fit against the measurement reference surface, and an extension direction of the track 112 is parallel to the reference surface 111; the two magnetic blocks are each located in one of the two first grooves 113, and both first grooves 113 are recessed from the reference surface 111 towards the interior of the support beam 110; the third end and the fourth end are disposed opposite each other, where the third end is provided with one first groove 113 and one spirit level 115, and the fourth end is also provided with one first groove 113 and one spirit level 115; and a pointing direction of the third end to the fourth end is the same as the extension direction of the track 112; and a flush gauge 120, where the flush gauge 120 includes a main body 121 and a measurement rod 122, where the main body 121 is slidably disposed on the track 112, and the measurement rod 122 includes a first end 123 and a second end 124 disposed opposite each other, where the first end 123 is fixed to the main body 121, and the second end 124 is configured to abut against surface of the object being measured and able to move toward and away from the first end 123. According to some embodiments of this application, the measurement assembly provided in this application may further include two bases 130 that are attractable by a magnetic block, and both bases 130 fit the reference surface 111. The two magnetic blocks each attract one base 130.

In some embodiments, the measurement system includes multiple support beams 110 and a flush gauge 120. The support beam 110 includes a reference surface 111 and a track 112, where the reference surface 111 is used to fit against the measurement reference surface, and an extension direction of the track 112 is parallel to the reference surface 111. Lengths of the tracks 112 of the support beams 110 are different. The flush gauge 120 includes a main body 121 and a measurement rod 122. The main body 121 is slidably disposed on the track 112. The measurement rod 122 includes a first end 123 and a second end 124 disposed opposite each other, where the first end 123 is fixed to the main body 121, and the second end 124 is configured to abut against a surface of an object being measured and is movable toward and away from the first end 123. The main body 121 of the flush gauge 120 is slidably disposed on the track 112 of any one support beam 110, and the flush gauge 120 is detachably disposed on the track 112. Actually, the support beams 110 and flush gauge 120 provided in this embodiment are the same as the support beams 110 and flush gauge 120 provided in the foregoing embodiments, and therefore, the support beams 110 and flush gauge 120 provided in this embodiment have the same advantageous effects as the support beams 110 and flush gauge 120 provided in the foregoing embodiments. Details are not repeated herein.

In some embodiments, during measurement of the flush of the object being measured, the main body 121 of the flush gauge 120 can be disposed on a track 112 that matches the size of the object. In one example, the track 112 that matches the size of the object being measured refers to a track 112 whose length is greater than the size of the object being measured in the horizontal direction, and a difference between the length of the track 112 and the size of the object being measured in the horizontal direction is smaller than the difference between the length of any other track 112 and the size of the object being measured in the horizontal direction.

In some embodiments, there are three support beams 110, and the lengths of the tracks 112 for the three support beams 110 are 500 millimeters (mm), 1000 millimeters (mm), and 1500 millimeters (mm), respectively. During use of the measurement system, a track 112 that matches the size of the object being measured is selected, and the main body 121 of the flush gauge 120 is disposed on that track 112. In an embodiment, the object being measured has a size of 450 mm in the horizontal direction, and a track 112 with a length of 500 mm is selected to match the size of the object. Therefore, the main body 121 of the flush gauge 120 is placed on the 500 mm track 112. In another embodiment, the object being measured has a size of 970 mm in the horizontal direction, and a track 112 with a length of 1000 mm is selected to match the size of the object. Therefore, the main body 121 of the flush gauge 120 is placed on the 1000 mm track 112. In still another embodiment, the object being measured has a size of 1070 mm in the horizontal direction, and a track 112 with a length of 1500 mm is selected to match the size of the object. Therefore, the main body 121 of the flush gauge 120 is placed on the 1500 mm track 112.

Furthermore, it should be noted that in some embodiments, any one support beam 110 in the measurement system may further include the magnetic blocks, first grooves 113, third end, fourth end, and spirit levels 115 as described in the previous embodiments. The flush gauge 120 in the measurement system may further include the main body and protrusion as described in the previous embodiments. This is not repeated herein.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A measurement system, comprising:
multiple support beams (110), wherein the support beam (110) comprises a reference surface (111) and a track (112), wherein the reference surface (111) is used to fit against a measurement reference surface (111), and an extension direction of the track (112) is parallel to the reference surface (111); and
a flush gauge (120), wherein the flush gauge (120) comprises a main body (121) and a measurement rod (122), wherein the measurement rod (122) comprises a first end (123) and a second end (124) disposed opposite each other, wherein the first end (123) is fixedly connected to the main body (121), and the second end (124) is configured to abut against a surface of an object being measured, and the second end (124) is configured to be movable toward and away from the first end (123);
wherein the main body (121) of the flush gauge (120) is slidably disposed on the track (112) of any one of the support beams (110); **characterized in that** lengths of the tracks (112) of any two support beams (110) are different.

2. The measurement system according to claim 1, wherein
any one of the support beams (110) further comprises at least one first groove (113) and a magnetic block located within the first groove (113), wherein the first groove (113) is a groove formed by the reference surface (111) recessed towards interior of the support beam (110).

3. The measurement system according to claim 2, wherein
two first grooves (113) are provided on any one of the support beams (110), and each of the first grooves (113) is provided with one magnetic block.

4. The measurement system according to claim 3, wherein
any one of the support beams (110) further comprises a third end and a fourth end disposed opposite each other, wherein a pointing direction of the third end to the fourth end is the same as an extension direction of the track (112), and the two first grooves (113) on any one of the support beams (110) are respectively located at the third end and the fourth end of the corresponding support beam (110); or the measurement system further comprises:
two bases (130) respectively located at the third end and the fourth end of any one of the support beams (110), and any one of the bases (130) is magnetically attracted to the corresponding magnetic block to fit against the reference surface (111).

5. The measurement system according to any one of claims 1 to 4, wherein
any one of the support beams (110) further comprises a spirit level (115), wherein the spirit level (115) is configured to measure whether the support beam (110) is level; optionally
any one of the support beams (110) further comprises a side surface (116) next to the reference surface (111), and the track (112) is a second groove recessed from the side surface (116) towards the interior of the support beam (110), wherein a recess direction of the track (112) is perpendicular to the extension direction of the track (112), and the main body (121) comprises a body fixed to the first end (123) and a protrusion connected to the body, and the protrusion is detachably fitted into the second groove to allow the main body (121) to be slidably disposed on the track (112).

6. A measurement method, comprising:
providing the measurement system according to any one of claims 1 to 5;
obtaining dimensions of an object being measured and selecting, from the measurement system based on the dimensions, a support beam having a track that matches the dimensions of the object being measured;
fitting the reference surface of the support beam against a measurement reference surface;
fitting the main body of the flush gauge into the track of the support beam and abutting the second end against a surface of the object being measured to obtain flush at an abutting point; and
moving the flush gauge along the track to obtain flush at other points on the surface of the object being measured.

## Patentansprüche

1. Messsystem, umfassend:
mehrere Stützträger (110), wobei der Stützträger (110) eine Referenzfläche (111) und eine Führung (112) umfasst, wobei die Referenzfläche (111) dazu verwendet wird, an einer Messreferenzfläche (111) anzuliegen, und eine Erstreckungsrichtung der Führung (112) parallel zu der Referenzfläche (111) ist; und
ein Bündigkeitsmessgerät (120), wobei das Bündigkeitsmessgerät (120) einen Hauptkörper (121) und einen Messstab (122) umfasst, wobei der Messstab (122) ein erstes Ende (123) und ein zweites Ende (124) umfasst, die einander gegenüberliegend angeordnet sind, wobei das erste Ende (123) fest mit dem Hauptkörper (121) verbunden ist und das zweite Ende (124) dazu eingerichtet ist, an einer Oberfläche eines zu messenden Objekts anzuliegen, und das zweite Ende (124) dazu eingerichtet ist, in Richtung auf das erste Ende (123) und von diesem weg bewegbar zu sein;
wobei der Hauptkörper (121) des Bündigkeitsmessgeräts (120) verschiebbar auf der Führung (112) eines beliebigen der Stützträger (110) angeordnet ist; **dadurch gekennzeichnet, dass** die Längen der Führungen (112) von jeweils zwei beliebigen Stützträgern (110) unterschiedlich sind.

2. Messsystem nach Anspruch 1, wobei
ein beliebiger der Stützträger (110) ferner mindestens eine erste Nut (113) und einen innerhalb der ersten Nut (113) angeordneten Magnetblock umfasst, wobei die erste Nut (113) eine Nut ist, die durch eine Vertiefung der Referenzfläche (111) zum Inneren des Stützträgers (110) hin gebildet ist.

3. Messsystem nach Anspruch 2, wobei
zwei erste Nuten (113) an einem beliebigen der Stützträger (110) vorgesehen sind und jede der ersten Nuten (113) mit einem Magnetblock versehen ist.

4. Messsystem nach Anspruch 3, wobei
ein beliebiger der Stützträger (110) ferner ein drittes Ende und ein viertes Ende umfasst, die einander gegenüberliegend angeordnet sind, wobei eine vom dritten Ende zum vierten Ende weisende Richtung dieselbe ist wie eine Erstreckungsrichtung der Führung (112), und die beiden ersten Nuten (113) an einem beliebigen der Stützträger (110) jeweils am dritten Ende und am vierten Ende des entsprechenden Stützträgers (110) angeordnet sind; oder das Messsystem ferner umfasst:
zwei Basen (130), die sich jeweils am dritten Ende und am vierten Ende eines beliebigen der Stützträger (110) befinden, und eine beliebige der Basen (130) von dem entsprechenden Magnetblock magnetisch angezogen ist, um an der Referenzfläche (111) anzuliegen.

5. Messsystem nach einem der Ansprüche 1 bis 4, wobei
ein beliebiger der Stützträger (110) ferner eine Wasserwaage (115) umfasst, wobei die Wasserwaage (115) dazu eingerichtet ist, zu messen, ob der Stützträger (110) waagerecht ist; wahlweise
ein beliebiger der Stützträger (110) ferner eine Seitenfläche (116) neben der Referenzfläche (111) umfasst und die Führung (112) eine zweite Nut ist, die von der Seitenfläche (116) aus zum Inneren des Stützträgers (110) hin vertieft ist, wobei eine Vertiefungsrichtung der Führung (112) senkrecht zu der Erstreckungsrichtung der Führung (112) ist, und der Hauptkörper (121) einen am ersten Ende (123) befestigten Körper und einen mit dem Körper verbundenen Vorsprung umfasst und der Vorsprung lösbar in die zweite Nut eingepasst ist, um zu ermöglichen, dass der Hauptkörper (121) verschiebbar auf der Führung (112) angeordnet werden kann.

6. Messverfahren, umfassend:
Bereitstellen des Messsystems nach einem der Ansprüche 1 bis 5;
Ermitteln von Abmessungen eines zu messenden Objekts und Auswählen, aus dem Messsystem auf Grundlage der Abmessungen, eines Stützträgers, der eine Führung aufweist, die den Abmessungen des zu messenden Objekts entspricht;
Anlegen der Referenzfläche des Stützträgers an eine Messreferenzfläche;
Einpassen des Hauptkörpers des Bündigkeitsmessgeräts in die Führung des Stützträgers und Anlegen des zweiten Endes an eine Oberfläche des zu messenden Objekts, um Bündigkeit an einem Anlagepunkt zu erhalten; und
Bewegen des Bündigkeitsmessgeräts entlang der Führung, um Bündigkeit an anderen Punkten auf der Oberfläche des zu messenden Objekts zu erhalten.

## Revendications

1. Système de mesure, comprenant :
plusieurs poutres de support (110), dans lequel la poutre de support (110) comprend une surface de référence (111) et un guide (112), dans lequel la surface de référence (111) est utilisée pour venir en appui contre une surface de référence de mesure (111), et une direction d'extension du guide (112) est parallèle à la surface de référence (111) ; et
une jauge d'affleurement (120), dans laquelle la jauge d'affleurement (120) comprend un corps principal (121) et une tige de mesure (122), dans laquelle la tige de mesure (122) comprend une première extrémité (123) et une deuxième extrémité (124) disposées à l'opposé l'une de l'autre, dans laquelle la première extrémité (123) est reliée de manière fixe au corps principal (121), et la deuxième extrémité (124) est configurée pour venir en appui contre une surface d'un objet à mesurer, et la deuxième extrémité (124) est configurée pour être mobile en rapprochement et en éloignement par rapport à la première extrémité (123) ;
dans lequel le corps principal (121) de la jauge d'affleurement (120) est disposé de manière coulissante sur le guide (112) de l'une quelconque des poutres de support (110) ; **caractérisé en ce que** les longueurs des guides (112) de deux poutres de support (110) quelconques sont différentes.

2. Système de mesure selon la revendication 1, dans lequel
l'une quelconque des poutres de support (110) comprend en outre au moins une première rainure (113) et un bloc magnétique situé à l'intérieur de la première rainure (113), dans lequel la première rainure (113) est une rainure formée par un retrait de la surface de référence (111) vers l'intérieur de la poutre de support (110).

3. Système de mesure selon la revendication 2, dans lequel
deux premières rainures (113) sont prévues sur l'une quelconque des poutres de support (110), et chacune des premières rainures (113) est pourvue d'un bloc magnétique.

4. Système de mesure selon la revendication 3, dans lequel
l'une quelconque des poutres de support (110) comprend en outre une troisième extrémité et une quatrième extrémité disposées à l'opposé l'une de l'autre, dans lequel une direction pointant de la troisième extrémité vers la quatrième extrémité est identique à une direction d'extension du guide (112), et les deux premières rainures (113) sur l'une quelconque des poutres de support (110) sont respectivement situées à la troisième extrémité et à la quatrième extrémité de la poutre de support correspondante (110) ; ou le système de mesure comprend en outre :
deux bases (130) respectivement situées à la troisième extrémité et à la quatrième extrémité de l'une quelconque des poutres de support (110), et l'une quelconque des bases (130) est attirée magnétiquement par le bloc magnétique correspondant afin de venir en appui contre la surface de référence (111).

5. Système de mesure selon l'une quelconque des revendications 1 à 4, dans lequel
l'une quelconque des poutres de support (110) comprend en outre un niveau à bulle (115), dans lequel le niveau à bulle (115) est configuré pour mesurer si la poutre de support (110) est de niveau ; facultativement
l'une quelconque des poutres de support (110) comprend en outre une surface latérale (116) adjacente à la surface de référence (111), et le guide (112) est une deuxième rainure creusée depuis la surface latérale (116) vers l'intérieur de la poutre de support (110), dans lequel une direction de creusement du guide (112) est perpendiculaire à la direction d'extension du guide (112), et le corps principal (121) comprend un corps fixé à la première extrémité (123) et une saillie reliée au corps, et la saillie est ajustée de manière amovible dans la deuxième rainure afin de permettre au corps principal (121) d'être disposé de manière coulissante sur le guide (112).

6. Procédé de mesure, comprenant :
la fourniture du système de mesure selon l'une quelconque des revendications 1 à 5 ;
l'obtention des dimensions d'un objet à mesurer et la sélection, dans le système de mesure sur la base des dimensions, d'une poutre de support ayant un guide qui correspond aux dimensions de l'objet à mesurer ;
la mise en appui de la surface de référence de la poutre de support contre une surface de référence de mesure ;
l'ajustement du corps principal de la jauge d'affleurement dans le guide de la poutre de support et la mise en appui de la deuxième extrémité contre une surface de l'objet à mesurer afin d'obtenir l'affleurement en un point d'appui ; et
le déplacement de la jauge d'affleurement le long du guide afin d'obtenir l'affleurement en d'autres points sur la surface de l'objet à mesurer.
